# EUROPÄISCHE PATENTANMELDUNG

(11) **EP 0 724 977 A1**
(43) Veröffentlichungstag der Anmeldung: **07.08.1996**
(21) Anmeldenummer: 95118416.7
(22) Anmeldetag: 23.11.1995
(51) Int. Cl.: B60K 6/02

(54) **Parallelhybridantrieb für ein Kraftfahrzeug**

(30) Priorität: 03.02.1995 DE 19503500
(71) Anmelder: FICHTEL & SACHS AG, D-97424 Schweinfurt (DE)
(72) Erfinder: Röder, Manfred, Dipl.-Ing., D-97525 Schwebheim (DE); Rüthlein, Alfred, Dipl.-Ing, D-97526 Sennfeld (DE); Schmidt-Brücken, Hans-Joachim, Dipl.-Physiker, D-97505 Geldersheim (DE); Schulz-Andres, Heiko, Dipl.-Ing., D-97490 Poppenhausen (DE); Tulaczko, Boleslaw, Dipl.-Ing., D-97464 Niederwerrn (DE); Welke, Knut, Dipl.-Ing., D-97456 Dittelbrunn (DE); Wirth, Thomas, Dipl.-Ing., D-97523 Schwanfeld (DE)

(57) **Zusammenfassung**

Zur Vereinfachung eines Schaltgetriebes (7) eines Parallelhybridantriebs eines Kraftfahrzeugs, das sowohl über einen Verbrennungsmotor (1) als auch über eine elektrische Maschine (11) angetrieben werden kann, wird vorgeschlagen, daß beim Anfahren des Kraftfahrzeugs in Vorwärtsfahrtrichtung oder/und in Rückwärtsfahrtrichtung das Antriebsdrehmoment ausschließlich von der elektrischen Maschine (11) erzeugt wird. Auf diese Weise kann der erste Gang oder/und der Rückwärtsgang des Getriebes (7) eingespart werden.

## Beschreibung

Die Erfindung betrifft einen Parallelhybridantrieb für ein Kraftfahrzeug.

Bei einem herkömmlichen Parallelhybridantrieb für ein Kraftfahrzeug, wie er beispielsweise aus DE-C-42 02 083 bekannt ist, wird ein im Antriebsstrang des Kraftfahrzeugs angeordnetes mehrgängiges Schaltgetriebe sowohl von einem Verbrennungsmotor als auch von einer elektrischen Maschine aus angetrieben. Im Drehmomentübertragungsweg zwischen dem Verbrennungsmotor und dem Getriebe ist eine gegebenenfalls automatisierte Reibungs-Trennkupplung angeordnet. Bei Antrieb des Kraftfahrzeugs durch die dann motorisch betriebene elektrische Maschine allein ist die Trennkupplung sowohl beim Anfahren als auch beim Wechseln der Gänge des Getriebes geöffnet. Beim Antrieb des Kraftfahrzeugs durch den Verbrennungsmotor mit oder ohne Unterstützung durch die elektrische Maschine dient die Trennkupplung sowohl als Anfahr- als auch als Schaltkupplung. Zur Schonung der Synchronisierorgane des Getriebes wird die elektrische Maschine als aktive Synchronisierungshilfe ausgenutzt.

Das Getriebe herkömmlicher Parallelhybridantriebe ist herkömmlich ausgebildet, d.h. es umfaßt eine Vielzahl Vorwärtsgänge sowie einen die Drehrichtung der Ausgangswelle, bezogen auf den Drehsinn der Eingangswelle, umkehrenden Rückwartsgang. Der erste Gang und der Rückwärtsgang eines solchen Getriebes ist für das Anfahren bei Antrieb durch den Verbrennungsmotor ausgelegt. Das Getriebe, bei welchem es sich um ein manuell schaltbares Getriebe, um ein automatisiertes Getriebe oder auch um ein auf der Grundlage von Planetenradsätzen aufgebautes Automatikgetriebe handeln kann, wird durch die Vielzahl erforderlicher Vorwärtsgänge und nicht zuletzt durch den eine zusätzliche Nebenwelle erfordernden Rückwärtsgang vergleichsweise aufwendig. Nicht zuletzt kann es sich bei dem Getriebe um ein stufenlos schaltbares Getriebe handeln, das sich stufenlos über einen Übersetzungsverhältnisbereich hinweg verstellen läßt, der zumindest einen Vorwärts-Anfahrbereich, einen Vorwärts-Fahrbereich und einen Rückwärts-Fahr- und Anfahrbereich umfaßt.

Es ist Aufgabe der Erfindung, einen Parallelhybridantrieb für ein Kraftfahrzeug zu schaffen, der mit einem einfacheren Getriebe als bisher auskommt.

Unter einem ersten Aspekt geht die Erfindung aus von einem Parallelhybridantrieb, welcher umfaßt:
einen Verbrennungsmotor,
eine elektrische Maschine,
ein über einen ersten Drehmomentübertragungsweg mit dem Verbrennungsmotor und über einen zweiten Drehmomentübertragungsweg mit der elektrischen Maschine verbundenes, in mehrere Übersetzungsverhältnisbereiche oder/und in mehreren Stufen schaltbares Getriebe,
eine Trennkupplung zumindest in dem ersten Drehmomentübertragungsweg,
eine den Betrieb zumindest der elektrischen Maschine steuernde, elektronische Steuerung und
Fahrgeschwindigkeitssensormittel.

Erfindungsgemäß ist vorgesehen, daß die Steuerung auf die Fahrgeschwindigkeitssensormittel anspricht und bei Fahrgeschwindigkeit null oder nahezu null zum Anfahren ausschließlich die elektrische Maschine, bei Fahrgeschwindigkeit über einer vorgegebenen Schwelle zusätzlich oder ausschließlich den Verbrennungsmotor für die Erzeugung eines Antriebsdrehmoments freigibt.

Der Erfindung liegt die Überlegung zugrunde, daß die elektrische Maschine in der Regel auch bei Stillstand ihres Läufers in der Lage ist, ein zum Anfahren ausreichendes Drehmoment zu erzeugen, und zwar selbst dann, wenn das Getriebe keine für das Anfahren bei Antrieb durch den Verbrennungsmotor bemessenen Übersetzungsverhältnisbereich oder Gang besitzt. Bei herkömmlichen Getrieben sind üblicherweise der "erste" Gang sowie der Rückwärtsgang als sogenannte Anfahrgänge ausgelegt. Im Fall eines stufenlosen variablen Getriebes umfaßt der Übersetzungs-Stellbereich je einen für das Anfahren in Vorwärtsrichtung bzw. Rückwärtsrichtung ausgelegten Übersetzungsbereich. Die Anfahrgänge bzw. Übersetzungsbereiche haben in der Regel ein Übersetzungsverhältnis, das komfortables Anfahren in einem Drehzahlbereich des Verbrennungsmotors erlaubt, in welchem der Verbrennungsmotor bereits ein hinreichend großes Drehmoment erzeugt. Wird das Kraftfahrzeug beim Anfahren ausschließlich von der elektrischen Maschine angetrieben, können durch geeignete Wahl der Übersetzungsstufen des Getriebes zumindest ein Teil der Anfahrgänge, beispielsweise der bisherige erste Gang oder/und der Rückwärtsgang eingespart werden. Hinzu kommt, daß die Trennkupplung nur noch beim Wechseln der Gänge während des Antriebs durch den Verbrennungsmotor genutzt wird und nicht während des Anfahrvorgangs. Die Trennkupplung kann damit für eine geringere Belastung als bisher bemessen werden.

Unter einem zweiten Aspekt geht die Erfindung wiederum von dem bereits vorstehend erläuterten Parallelhybridantrieb aus, wobei jedoch zusätzlich eine manuell betätigbare Fahrtrichtungswähleinrichtung vorhanden ist, an der der Fahrer des Kraftfahrzeugs die Vorwärtsfahrtrichtung bzw. die Rückwärtsfahrtrichtung vorwählen kann. Die Fahrtrichtungswähleinrichtung kann, beispielsweise bei einem automatisierten Getriebe oder einem auf der Basis von Planetenradsätzen aufgebauten Automatikgetriebe durch den Gangwählhebel realisiert sein bzw. bei einem manuell zu schaltenden Stufengetriebe mit Hilfe von Sensoren realisiert sein, die die Schaltstellung des Gangschalthebels oder des Getriebes erfassen. Die unter dem ersten Aspekt erwähnten Fahrgeschwindigkeitssensormittel können gegebenenfalls entfallen. Entsprechendes gilt auch für stufenlose variable Getriebe.

Unter dem zweiten Aspekt ist erfindungsgemäß vorgesehen, daß die Steuerung auf die Fahrtrichtungswähleinrichtung anspricht und in Rückwärtsfahrtrichtung ausschließlich die elektrische Maschine in einer ersten Drehrichtung und in Vorwärtsfahrtrichtung die elektrische Maschine in einer zur ersten Drehrichtung entgegengesetzten zweiten Drehrichtung oder zusätzlich den Verbrennungsmotor oder ausschließlich den Verbrennungsmotor für die Erzeugung eines Antriebsdrehmoments freigibt.

Der zweite Aspekt der Erfindung geht davon aus, daß das Getriebe herkömmlicher Kraftfahrzeuge lediglich einen einzigen Rückwärtsgang hat, dessen Getriebestufe eingespart werden kann, wenn das Kraftfahrzeug bei der Rückwärtsfahrt ausschließlich von der elektrischen Maschine angetrieben wird. Das Getriebe ist also ausschließlich in Übersetzungsbereichen variabel bzw. in Stufen schaltbar, deren Ausgangsdrehsinn bezogen auf den Eingangsdrehsinn gleich ist. Die für Rückwärtsgänge normalerweise erforderlichen Nebenwellen und Zahnradsätze können entfallen. In Vorwärtsfahrtrichtung kann das Kraftfahrzeug in sämtlichen Gängen bzw. Übersetzungsbereichen herkömmlich sowohl über die elektrische Maschine als auch von dem Verbrennungsmotor aus angetrieben werden; entsprechend dem ersten Aspekt der Erfindung kann jedoch auch hier vorgesehen sein, daß für das Anfahren des vom Verbrennungsmotor getriebenen Kraftfahrzeugs vorgesehene "Anfahrgänge" bzw. Anfahr-Übersetzungsbereiche entfallen.

Die elektrische Maschine ist zweckmäßigerweise als elektrisch kommutierte Synchronmaschine mit dauermagnetischer Erregung ausgebildet, da solche Maschinen ein besonders hohes Anfangsdrehmoment bei geringem Platzbedarf haben.

Die elektrische Maschine kann, wie dies in DE-C-42 02 082 dargestellt ist, in einer 1:1-Drehverbindung mit einer Nebenwelle des Getriebes stehen oder aber direkt mit der Eingangswelle des Getriebes verbunden sein, während der Verbrennungsmotor über die Trennkupplung mit der Eingangswelle verbunden ist. Bei der Trennkupplung handelt es sich bevorzugt um eine Reibungskupplung, die mittels eines von der Steuerung steuerbaren Stellantriebs geöffnet und geschlossen wird. Es versteht sich, daß die Steuerung bei verbrennungsmotorischem Antrieb die elektrische Maschine auch hier zu aktiven Unterstützung der Getriebesynchronisierung ausgenutzt werden kann. Es versteht sich, daß die Anordnung auch eine weitere steuerbare Trennkupplung im Drehmomentübertragungsweg zwischen dem Elektromotor und dem Verbrennungsmotor umfassen kann.

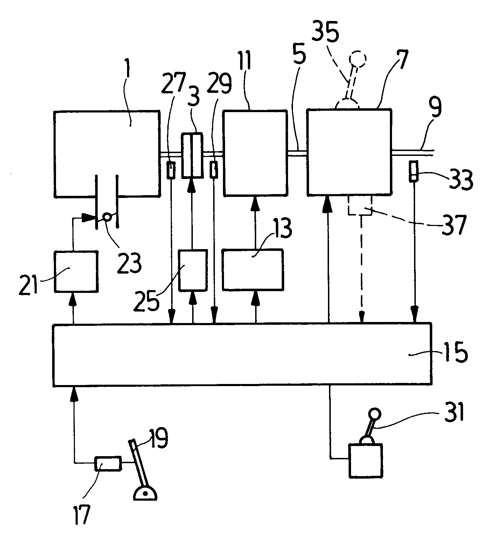

Im folgenden wird ein Ausführungsbeispiel der Erfindung anhand einer Zeichnung näher erläutert. Die Zeichnung zeigt ein schematisches Blockschaltbild eines Ausführungsbeispiels eines für ein Kraftfahrzeug geeigneten Parallelhybridantriebs gemäß der Erfindung.

Der Parallelhybridantrieb umfaßt einen Verbrennungsmotor 1, der über eine Reibungs-Trennkupplung 3 mit einer Eingangswelle 5 eines in mehreren Stufen schaltbaren Getriebes 7 verbunden ist. Das Getriebe 7 hat eine in nicht näher dargestellter Weise min Antriebsrädern des Kraftfahrzeugs verbundene Ausgangswelle 9. Mit der Eingangswelle 5 ist über eine nicht näher dargestellte 1:1-Drehverbindung eine elektrische Maschine 11 verbunden, die sowohl als Elektromotor als auch als Generator arbeiten kann um im motorischen Betrieb aus einer nicht näher dargestellten Traktionsbatterie des Kraftfahrzeugs gespeist wird bzw. im Generatorbetrieb die Traktionsbatterie lädt. Bei der elektrischen Maschine handelt es sich um eine von einer Kommutierungsschaltung 13 elektronisch kommutierte Synchronmaschine mit Dauermagneterregung, insbesondere um eine elektrische Maschine mit Dauermagnet-Außenläufer.

Der Betrieb des Verbrennungsmotors 1 und der elektrischen Maschine 11 wird von einer elektronischen Steuerung 15 gesteuert. Die Steuerung 15 bestimmt im Motorbetrieb der elektrischen Maschine 11 über die Kommutierungsschaltung 13 das Antriebsdrehmoment und die Drehzahl abhängig von der mittels eines Pedalsensors 17 erfaßten Position eines vom Fahrer zu bedienenden Fahrpedals 19. Die Steuerung 15 steuert darüber hinaus einen Stellantrieb 21 eines Leistungsstellglieds 23 des Verbrennungsmotors 1, beispielsweise einer Drosselklappe oder einer Einspritzpumpe.

Im dargestellten Ausführungsbeispiel ist der Kupplung 3 gleichfalls ein Stellantrieb 25 zugeordnet, der von der Steuerung 15 für das Öffnen und Schließen der Kupplung 3 abhängig von Drehzahlsensoren 27, 29 gesteuert wird, die die Eingangsdrehzahl bzw. die Ausgangsdrehzahl der Kupplung 3 erfassen. Das Schaltgetriebe 7 ist als automatisiertes Getriebe ausgebildet, dessen nicht näher dargestellte Aktuatoren gleichfalls von der Steuerung 15 abhängig von Fahrbetriebsparametern des Kraftfahrzeugs in herkömmlicher Weise gesteuert werden. Die Steuerung 15 automatisiert darüber hinaus das Öffnen und Schließen der Kupplung 3 beim Schalten der Gänge des Getriebes 7. Die an dem Getriebe 7 einzustellenden Gänge oder Gangbereiche können mittels eines manuell zu bedienenden Wählhebels 31, auf dessen Sensorik die Steuerung 15 anspricht, eingestellt werden. Der Wählhebel 31 erlaubt auch die Wahl der Fahrtrichtung, d.h. Vorwärtsfahrt oder Rückwärtsfahrt. Die aktuelle Fahrgeschwindigkeit wird von einem Fahrgeschwindigkeitssensor 33 erfaßt und der Steuerung 15 gemeldet.

Das Getriebe 7 umfaßt keinen Rückwärtsgang, hat also ausschließlich Getriebestufen, bei welchen sich die Ausgangswelle 9 - gleichbleibenden Drehsinn der Eingangswelle 5 vorausgesetzt - mit gleichbleibendem Drehsinn dreht. Die elektrische Maschine 11 kann zumindest im Motorbetrieb in beiden Drehrichtungen betrieben werden. Für die Rückwärtsfahrt wird das Kraftfahrzeug ausschließlich durch die elektrische Maschine 11 angetrieben, deren Drehrichtung elektronisch gegenüber dem Vorwärtsfahrtdrehsinn umgekehrt wird.

Herkömmliche Schaltgetriebe haben sogenannte "Anfahrgänge", die das Anfahren aus dem Stillstand mit betriebsmäßig zulässigem Schlupf der Kupplung erlauben. Im dargestellten Ausführungsbeispiel ist die Anzahl der Übersetzungsstufen des Schaltgetriebes 7 unter Verzicht auf den herkömmlich als Anfahrgang in Vorwärtsrichtung benutzten ersten Gang verringert. Zum Anfahren in Vorwärtsfahrtrichtung gibt die Steuerung 15 bei auf einem der Vorwärtsfahrgänge eingestellten Wählhebel 31 ausschließlich die elektrische Maschine 11 in ihrer Vorwärtsfahrt-Drehrichtung frei. Die Steuerung 15 erfaßt den Wunsch des Fahrers aus dem Stillstand bzw. nahezu Stillstand heraus anzufahren, abhängig von dem Fahrgeschwindigkeitssensor 33 und der Betätigung des Fahrpedals 19. Das von der elektrischen Maschine 11 beim Anfahren erzeugte Drehmoment wird durch die Position des Fahrpedals 19 bestimmt. Übersteigt die Fahrgeschwindigkeit eine vorbestimmte Schwelle, so schaltet die Steuerung 15 in an sich bekannter Weise entweder zusätzlich den Verbrennungsmotor 1 ein, wobei dann die beim Anfahren geöffnete Kupplung 3 geschlossen wird, oder aber das Antriebsmoment wird nach dem Anfahren ausschließlich von dem Verbrennungsmotor 1 erzeugt, wobei auch hier die Kupplung 3 geschlossen wird, jedoch die elektrische Maschine 11 gegebenenfalls auf Generatorbetrieb umgeschaltet wird.

Beim Antrieb des Kraftfahrzeugs durch die elektrische Maschine 11 allein bleibt die Kupplung 3 ständig geöffnet. Erfolgt der Antrieb durch den Verbrennungsmotor 1 allein oder zusätzlich zur elektrischen Maschine 11, so wird die Kupplung 3 beim Gangwechsel herkömmlich geöffnet und geschlossen. Zur Unterstützung von Zwangssynchronisiereinrichtungen des Getriebes 7, die durch das auf die Eingangswelle 5 wirkende Trägheitsmoment der elektrischen Maschine 11 zusätzlich belastet würden, sorgt die Steuerung 15 bei einem Gangwechsel durch motorisch beschleunigenden oder generatorisch bremsenden Betrieb der elektrischen Maschine 11 für eine aktive Synchronisierungsunterstützung, bei welcher die Drehzahl der Eingangswelle 5 auf die nach einem Gangwechsel zu erwartende Drehzahl beschleunigt bzw. gebremst wird.

Es versteht sich, daß die vorstehend erläuterte Idee, Anfahrgänge des Getriebes einzusparen, gegebenenfalls nur für Vorwärtsfahrgänge oder nur für den Rückwärtsfahrgang realisiert sein kann. Bei dem automatisierten Getriebe 7 kann es sich auch um ein manuell zu schaltendes Getriebe handeln, wie dies durch einen herkömmlichen Gangschalthebel bei 35 angedeutet ist. Welcher Gang an dem Getriebe eingestellt ist, wird durch Sensoren 37 ermittelt, die auch der Steuerung 15 signalisieren, ob ein Vorwärtsgang oder ein Rückwärtsgang eingelegt ist oder wird. Es versteht sich, daß auch die Kupplung 3 nicht so weit automatisiert sein muß, daß sie bei einem Gangwechsel selbsttätig geöffnet oder geschlossen wird; es genügt, wenn der Stellantrieb 25 den Verbrennungsmotor 1 von der Eingangswelle 5 des Getriebes trennen kann, wenn der Antrieb des Kraftfahrzeugs ausschließlich durch die elektrische Maschine 11 erfolgen soll. Bei dem Getriebe 7 kann es sich auch um ein Getriebe mit stufenlos variablem Übersetzungsverhältnis handeln. Den "Gängen" entsprechen hier Übersetzungsverhältnisbereiche, die das Anfahren bzw. den herkömmlichen Fahrbetrieb ermöglichen. Weiterhin kann zwischen dem Elektromotor 11 und dem Getriebe 7 eine weitere Trennkupplung angeordnet sein, beispielsweise um den Elektromotor 11 auch zum Anlassen des Verbrennungsmotors 1 ausnutzen zu können bzw. beim Schalten des Getriebes dessen Synchronisierung vom Trägheitsmoment des Elektromotors zu entlasten.

## Patentansprüche

1. Parallelhybridantrieb für ein Kraftfahrzeug, umfassend:
- einen Verbrennungsmotor (1),
- eine elektrische Maschine (11),
- ein über einen ersten Drehmomentübertragungsweg mit dem Verbrennungsmotor (1) und über einen zweiten Drehmomentübertragungsweg mit der elektrischen Maschine (11) verbundenes, in mehrere Übersetzungsverhältnisbereiche oder/und in mehreren Stufen schaltbares Getriebe (7),
- eine Trennkupplung (3) zumindest in dem ersten Drehmomentübertragungsweg,
- eine den Betrieb zumindest der elektrischen Maschine (11) steuernde, elektronische Steuerung (15) und
- Fahrgeschwindigkeitssensormittel (33),
dadurch gekennzeichnet, daß die Steuerung (15) auf die Fahrgeschwindigkeitssensormittel (33) anspricht und bei Fahrgeschwindigkeit Null oder nahezu Null zum Anfahren ausschließlich die elektrische Maschine (11), bei Fahrgeschwindigkeiten über einer vorgegebenen Schwelle zusätzlich oder ausschließlich den Verbrennungsmotor (1) für die Erzeugung eines Antriebsdrehmoments freigibt.

2. Parallelhybridantrieb für ein Kraftfahrzeug, umfassend:
- einen Verbrennungsmotor (1),
- eine elektrische Maschine (11),
- ein über einen ersten Drehmomentübertragungsweg mit dem Verbrennungsmotor (1) und über einen zweiten Drehmomentübertragungsweg mit der elektrischen Maschine (11) verbundenes, mehrere Übersetzungsverhältnisbereichen oder/und in mehreren Stufen schaltbares Getriebe (7),
- eine Trennkupplung (3) zumindest in dem ersten Drehmomentübertragungsweg,
- eine den Betrieb zumindest der elektrischen Maschine (11) steuernde, elektronische Steuerung (15),
- eine manuell betätigbare Fahrtrichtungswähleinrichtung (31; 35),
dadurch gekennzeichnet, daß die Steuerung (15) auf die Fahrtrichtungswähleinrichtung (31; 35) anspricht und in Rückwärtsfahrtrichtung ausschließlich die elektrische Maschine (11) in einer ersten Drehrichtung und in Vorwärtsfahrtrichtung die elektrische Maschine (11) in einer zur ersten Drehrichtung entgegengesetzten zweiten Drehrichtung oder zusätzlich den Verbrennungsmotor (1) oder ausschließlich den Verbrennungsmotor (1) für die Erzeugung eines Antriebsdrehmoments freigibt.

3. Parallelhybridantrieb nach Anspruch 1 oder 2, dadurch gekennzeichnet, daß das Getriebe (7) ausschließlich in Übersetzungsverhältnisbereiche oder/und in Stufen schaltbar ist, deren Ausgangsdrehsinn bezogen auf den Eingangsdrehsinn des Getriebes (7) gleich ist.

4. Parallelhybridantrieb nach einem der Ansprüche 1 bis 3, dadurch gekennzeichnet, daß die elektrische Maschine (11) als elektrisch kommutierte Synchronmaschine mit dauermagnetischer Erregung ausgebildet ist.

5. Parallelhybridantrieb nach einem der Ansprüche 1 bis 4, dadurch gekennzeichnet, daß die Trennkupplung (3) als mittels eines von der Steuerung (15) steuerbaren Stellantriebs (25) zu öffnende und zu schließende Reibungskupplung ausgebildet ist und daß der Verbrennungsmotor (1) über die Trennkupplung (3) mit einer Eingangswelle (5) des Getriebes (7) verbunden ist und die elektrische Maschine (11) in ständiger drehfester Verbindung zur Eingangswelle (5) steht.
